# EUROPEAN PATENT APPLICATION

(11) **EP 4 557 480 A1**
(43) Date of publication of application: **21.05.2025**
(21) Application number: 24778316.0
(22) Date of filing: 01.04.2024
(51) Int. Cl.: H01M 50/244, H01M 50/249

(54) **BATTERY BOX BODY AND POWER DEVICE COMPRISING SAME**

(30) Priority: 30.03.2023 CN 202320674976 U
(71) Applicant: Svolt Energy Technology (Wuxi) co., Ltd., Jiangsu 214105 (CN)
(72) Inventor: WANG, Nan, Wuxi, Jiangsu 214105 (CN); QU, Fanduo, Wuxi, Jiangsu 214105 (CN); ZHAO, Liang, Wuxi, Jiangsu 214105 (CN)
(74) Representative: M. Zardi & Co S.A.
(86) International application number: PCT/CN2024/085384
(87) International publication number: WO 2024/199531

(57) **Abstract**

A battery case and a power device comprising same. A battery compartment and an electric appliance compartment which are spaced apart are arranged in the battery case. The battery compartment is configured to accommodate a battery cell module. The electric appliance compartment is configured to arrange an electric appliance element of a battery therein. According to the battery case of the present disclosure, by arranging the battery compartment and the electric appliance compartment which are spaced apart, the battery cell module can be separated from the electric appliance element, so that the operation safety of a vehicle is guaranteed; additionally, maintenance of the electric appliance element is facilitated, and energy in the battery cell module can be output in a unified mode.

## Description

The present disclosure claims priority of Chinese patent application 202320674976.1, filed with the Chinese Patent Office on March 30, 2023 and entitled "Battery Case and Power Device Comprising Same", which is hereby incorporated by reference in its entirety.

### TECHNICAL FIELD

The present disclosure relates to the field of vehicle technology, in particular to a battery case and a power device having the same.

### BACKGROUND

In a power device in an existing scheme, a battery cell module and an electric appliance element are assembled within a battery case. This assembly approach makes maintenance of the electric appliance element and the battery cell module difficult. Furthermore, if thermal runaway occurs in the battery cell module, it may affect the electric appliance element, compromising safety.

### SUMMARY OF THE INVENTION

The present disclosure is intended to at least solve one of technical problems in the prior art. To this end, a battery case is proposed in the present disclosure. The battery case allows a battery cell module and an electric appliance element to be separated from each other to ensure the safety of a power device.

The present disclosure also proposes a power device having the battery case described above.

According to a battery case of embodiments of a first aspect of the present disclosure, the battery case has a battery compartment and an electric appliance compartment which are spaced apart, wherein the battery compartment is configured to accommodate a battery cell module, and the electric appliance compartment is configured to arrange an electric appliance element therein.

According to the battery case of the present disclosure, by arranging the battery compartment and the electric appliance compartment which are spaced apart, the battery cell module can be separated from the electric appliance element, so that the operation safety of a power device is guaranteed; additionally, maintenance of the electric appliance element is facilitated, and energy in the battery cell module can be output in a unified mode.

According to some embodiments of the present disclosure, the electric appliance compartment is arranged on an end of the battery case in a first direction thereof, the first direction being a length direction or a width direction of the battery case.

According to some embodiments of the present disclosure, the battery case includes a frame, which includes a first beam, a second beam, a third beam, and an electric appliance beam that are sequentially connected end-to-end to form a rectangular loop and define inwardly the battery compartment that is open at both the top and bottom thereof, with the electric appliance compartment being formed within the electric appliance beam.

According to some optional embodiments of the present disclosure, a fourth beam parallel to both the first beam and the third beam is provided at a middle position in a left-right direction of the battery case, two ends of the fourth beam being respectively connected to the electric appliance beam and the second beam, and wherein the fourth beam, together with the first beam, the second beam, the third beam and the electric appliance beam, form a frame in the shape of a rectangle with a central divider.

According to some optional embodiments of the present disclosure, the electric appliance beam extends from one end to the other end in a length direction of the battery case, and the electric appliance compartment extends from one end to the other end in a length direction of the electric appliance beam.

According to some optional embodiments of the present disclosure, the electric appliance beam includes a beam body and a cover plate, the beam body defining the electric appliance compartment that has an open side facing away from the battery compartment, and the cover plate covering the open side of the electric appliance compartment.

According to some optional embodiments of the present disclosure, the beam body is formed with a first leading-out port and a second leading-out port passing through the beam body, the first leading-out port and the second leading-out port being spaced apart, the first leading-out port being communicated between the battery compartment and the electric appliance compartment, the first leading-out port being configured to allow an acquisition component of the battery cell module to extend into the electric appliance compartment, the second leading-out port being communicated between the battery compartment and the electric appliance compartment, and the second leading-out port being configured to allow a busbar of the battery cell module to extend into the electric appliance compartment.

According to some optional embodiments of the present disclosure, two first leading-out ports are provided, and the two first leading-out ports are respectively formed at two ends of the beam body in a length direction thereof, and the second leading-out port is formed at a middle position on the beam body in the length direction thereof.

According to some embodiments of the present disclosure, the battery case further includes a plug socket, which is fixed within the electric appliance compartment and configured to be connected to the acquisition component, and the cover plate is formed with a first wire-through hole passing through the cover plate in a thickness direction of the cover plate, the first wire-through hole being configured to allow a first wire harness connected to the plug socket and/or the acquisition component to pass through.

According to some embodiments of the present disclosure, the battery case further includes an output pole seat, which is fixed within the electric appliance compartment and configured to be connected to the busbar, and the cover plate is formed with a second wire-through hole passing through the cover plate in a thickness direction of the cover plate, the second wire-through hole being configured to allow terminal posts connected to the busbar to pass through.

According to some embodiments of the present disclosure, the output pole seat is in a concave shape with a lower middle portion and two higher lateral portions, and two connecting portions of the busbar are respectively connected to the two lateral portions of the output pole seat, and the output pole seat and the busbar are fastened to each other by a bolt; and/or
the output pole seat is made of plastic.

According to some embodiments of the present disclosure, the cover plate is further provided with a water inlet port and a water outlet port, which are configured to be connected to a heat exchange pipe, and at least a portion of the heat exchange pipe is located within the electric appliance compartment.

According to some embodiments of the present disclosure, a liquid cooling plate is provided within the battery case, with a heat exchange channel as well as a first connecting pipe and a second connecting pipe communicated with the heat exchange channel being provided in the liquid cooling plate, and the heat exchange pipe includes a water inlet pipe and a water outlet pipe, one end of the water inlet pipe being connected to the first connecting pipe and the other end thereof being connected to the water inlet port, and one end of the water outlet pipe being connected to the second connecting pipe and the other end thereof being connected to the water outlet port.

According to some embodiments of the present disclosure, the cover plate is an aluminum stamped part, and the beam body is an aluminum-magnesium alloy die-cast part.

A power device according to embodiments of a second aspect of the present disclosure includes the battery case in the first aspect of this embodiment.

According to the power device of the present disclosure, by providing the battery case in the first aspect described above on the power device, and by providing the battery compartment and the electric appliance compartment which are spaced apart on the battery case, the battery cell module can be separated from the electric appliance element, so that the operation safety of the power device is guaranteed; additionally, maintenance of the electric appliance element is facilitated, and energy in the battery cell module can be output in a unified mode.

Additional aspects and advantages of the present disclosure will be provided in part in the following description, and part of them will become apparent from the following description, or be learned through practice of the present disclosure.

### BRIEF DESCRIPTION OF THE DRAWINGS

The drawings as a part of the present disclosure are used to provide further understanding of the present disclosure. Illustrative embodiments of the present disclosure and description thereof are used for explaining the present disclosure but do not improperly limit the present disclosure. In the drawings:
Fig. 1 is a schematic diagram of a power device according to embodiments of the present disclosure from an angle;
Fig. 2 is a partial enlarged diagram at A in Fig. 1;
Fig. 3 is a partial enlarged diagram at B in Fig. 1;
Fig. 4 is a schematic diagram of a battery shown in Fig. 1 from another angle; and
Fig. 5 is a schematic diagram of a battery case shown in Fig. 1 from an angle.

Reference numerals:
100, battery case;
101, battery compartment; 102, electric appliance compartment;
10, frame; 11, first beam; 12, third beam; 13, electric appliance beam; 131, beam body; 132, cover plate; 1321, first wire-through hole; 1322, second wire-through hole; 1323, water inlet port; 1324, water outlet port; 14, fourth beam;
20, output pole seat;
30, plug socket;
40, terminal post;
200, electric appliance element;
300, battery cell module; 310, acquisition component; 320, busbar;
400, heat exchange pipe;
1000, power device.

### DETAILED DESCRIPTION

It is to be noted that embodiments in the present disclosure and features in the embodiments can be combined with each other without conflict.

Embodiments of the present disclosure are described in detail below, with examples of the embodiments shown in the drawings, in which same or similar reference numerals throughout represent same or similar elements or elements having same or similar functions. The embodiments described below with reference to the drawings are exemplary and are intended only to explain the present disclosure and should not to be construed as limiting the present disclosure.

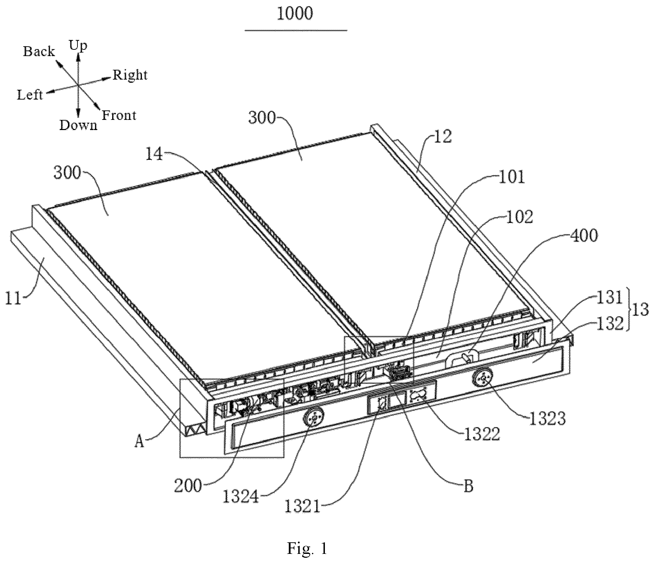

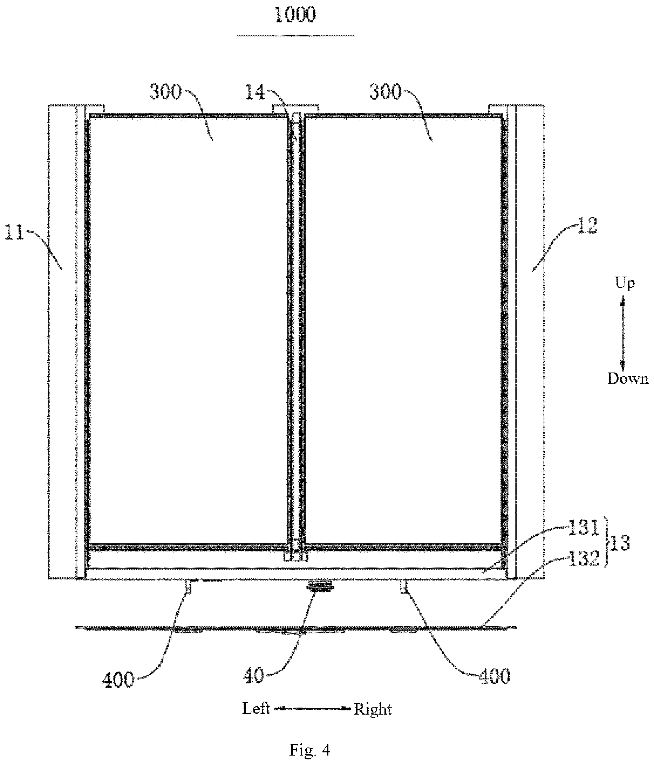

A battery case 100 according to embodiments of the present disclosure is described below with reference to Figs. 1 to 5.

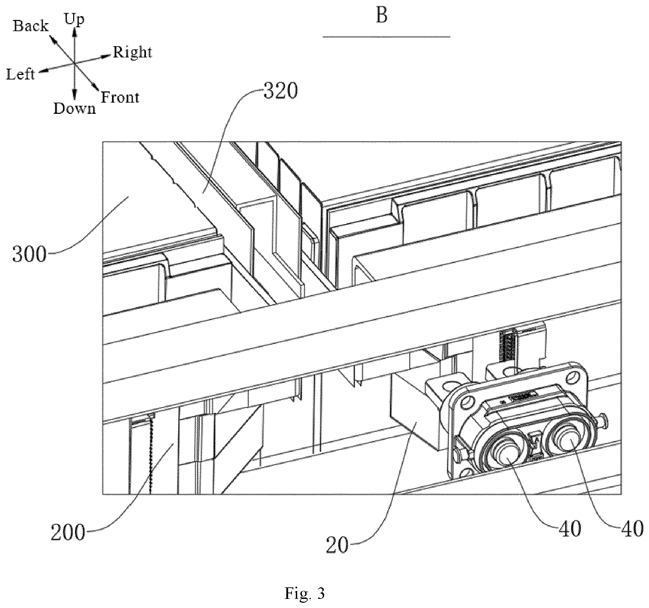

Referring to Figs. 1 and 3, according to a battery case 100 in a first aspect of the present disclosure, the battery case 100 has a battery compartment 101 and an electric appliance compartment 102 which are spaced apart. That is to say, the battery case 100 is formed with two compartments: the battery compartment 101 and the electric appliance compartment 102. The battery compartment 101 and the electric appliance compartment 102 are arranged in a separated manner. In other words, the battery compartment 101 and the electric appliance compartment 102 are isolated from each other. The battery compartment 101 is configured to accommodate a battery cell module 300, and the electric appliance compartment 102 is configured to arrange an electric appliance element 200 therein.

According to the battery case 100 of the present disclosure, by arranging the battery compartment 101 and the electric appliance compartment 102 which are spaced apart, the battery cell module 300 can be separated from the electric appliance element 200. Compared with a scheme of the prior art in which a battery cell module 300 is not separated from an electric appliance element 200, the battery case 100 of this embodiment can ensure normal operation of the electric appliance element 200 and prevent failure of a control system, when thermal runaway occurs in the battery cell module 300, thereby ensuring the operation safety of the power device 1000. Furthermore, the electric appliance compartment 102 allows the electric appliance element 200 to be integrated in the electric appliance compartment 102, which facilitates maintenance of the electric appliance element 200, and allows energy in the battery cell module 300 to be integrated into the electric appliance compartment 102 and output in a unified mode.

According to the battery case 100 of embodiments of the present disclosure, by arranging the battery compartment 101 and the electric appliance compartment 102 which are spaced apart, the battery cell module 300 can be separated from the electric appliance element 200, so that the operation safety of a power device 1000 is guaranteed; additionally, maintenance of the electric appliance element 200 is facilitated, and energy in the battery cell module 300 can be output in a unified mode.

According to some embodiments of the present disclosure, referring to Fig. 1, the electric appliance compartment 102 is arranged on an end (a front end of the battery case 100 as shown in Fig. 1) of the battery case 100 in a first direction thereof (a front-back direction as shown in Fig. 1). The first direction is a length direction or a width direction of the battery case 100. That is to say, the first direction may be a length direction of the battery case 100, or the first direction may be a width direction of the battery case 100. Thus, the battery compartment 101 can be separated from the electric appliance compartment 102 so that the battery compartment 101 and the electric appliance compartment 102 do not influence each other. Furthermore, arranging the electric appliance compartment 102 on an end of the battery case 100 can facilitate installation of the electric appliance element 200.

According to some embodiments of the present disclosure, referring to Figs. 1 and 3, the battery case 100 may include a frame 10. The frame 10 includes a first beam 11, a second beam, a third beam 12, and an electric appliance beam 13. The first beam 11, the second beam, the third beam 12, and the electric appliance beam 13 are sequentially connected end-to-end to form a rectangular loop and define inwardly the battery compartment 101 that is open at both the top and bottom thereof. The electric appliance compartment 102 is formed within the electric appliance beam 13.

By arranging the frame 10, the battery compartment 101 and the electric appliance compartment 102 can be formed, while ensuring the strength of the battery case 100 and improving the service life of the battery case 100. By arranging the electric appliance beam 13, the formation of the electric appliance compartment 102 can be facilitated, while ensuring the strength of the electric appliance compartment 102 and improving the service life of the electric appliance compartment 102. In addition, with the electric appliance beam 13, the battery compartment 101 can be separated from the electric appliance compartment 102, reducing the number of components used, thereby enabling weight and cost reduction of the battery case 100. Furthermore, this type of structure is simple, does not take up excess space of the battery case 100, and can improve the utilization of the space inside the battery case 100.

Further, a fourth beam 14 parallel to both the first beam 11 and the third beam 12 is also provided at a middle position in a left-right direction of the battery case 100. Two ends of the fourth beam 14 are respectively connected to the electric appliance beam 13 and the second beam, such that the fourth beam 14, together with the first beam 11, the second beam, the third beam 12 and the electric appliance beam 13, forms a frame 10 in the shape of a rectangle with a central divider, thereby further strengthening the structure of the battery case 100, and preventing the battery case 100 from being damaged. Moreover, the fourth beam 14 divides the battery compartment 101 into two compartments, which can facilitate installation of battery cell module 300. Preferably, the first beam 11, the second beam, the third beam 12, the fourth beam 14 and the electric appliance beam 13 are connected by welding, which can ensure the strength of the battery case 100.

Furthermore, the electric appliance beam 13 extends from one end to the other end in a length direction (e.g., a left-right direction shown in Fig. 1) of the battery case 100, and the electric appliance compartment 102 extends from one end to the other end in a length direction of the electric appliance beam 13. In this case, the length of the electric appliance compartment 102 is substantially equal to the length of the battery compartment 101, and the length of the electric appliance compartment 102 is substantially equal to the length of the battery case 100. Thus, not only can the length of the electric appliance compartment 102 and the volume of the electric appliance compartment 102 be increased, but it is also convenient for an integrated end of the battery cell module 300 to extend into the interior of the electric appliance compartment 102, with no need to consider whether or not an output end position of the battery cell module 300 corresponds to the electric appliance beam 13 in the front-back direction, thus facilitating the integrated end of the battery cell module 300 entering into the electric appliance compartment 102 at any position.

For example, as shown in Fig. 1, the electric appliance compartment 102 is formed within the electric appliance beam 13. The electric appliance compartment 102 is within the electric appliance beam 13 and extends in the left-right direction. The first beam 11, the second beam, the third beam 12, and the electric appliance beam 13 form the battery compartment 101. The battery compartment 101 is arranged at a back end of the electric appliance compartment 102. The top of the battery case 100 is open, such that the battery cell module 300 can enter the battery case 100 from top to bottom, which facilitates installation of the battery cell module 300.

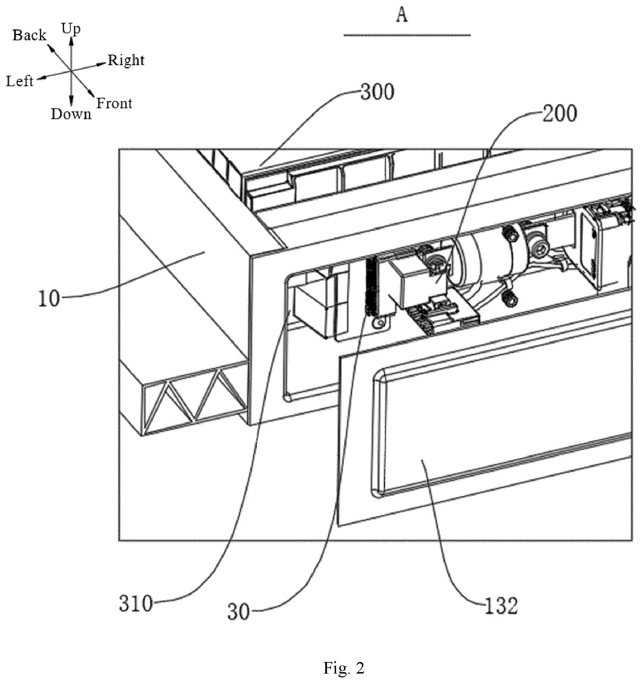

According to some embodiments of the present disclosure, referring to Figs. 1 and 2, the electric appliance beam 13 may include a beam body 131 and a cover plate 132. The beam body 131 defines the electric appliance compartment 102 that has an open side facing away from the battery compartment 101. The cover plate 132 covers the open side of the electric appliance compartment 102. By arranging the beam body 131, the formation of the electric appliance compartment 102 can be facilitated, while making the installation of the electric appliance element 200 convenient. By arranging the cover plate 132, an opening of the electric appliance compartment 102 can be covered, thereby effectively protecting the electric appliance compartment 102. In addition, during maintenance of the electric appliance element 200, removing the cover plate 132 allows inspection of the condition of the electric appliance element 200, making maintenance operations convenient.

For example, as shown in Fig. 1, the beam body 131 is a rectangular structure with an open front side, such that the electric appliance element 200 can be mounted from front to back within the electric appliance compartment 102. The cover plate 132 is plate-like, and the cover plate 132 covers the open side of the beam body 131. Preferably, the cover plate 132 and the beam body 131 are connected by welding, which can ensure the connection strength between the cover plate 132 and the beam body 131. Additionally, the cover plate 132 can be removed after weld points between the cover plate 132 and the beam body 131 are ground away, thereby facilitating the removal and installation of the cover plate 132.

According to some optional embodiments of the present disclosure, referring to Figs. 1 and 2, the beam body 131 is formed with a first leading-out port and a second leading-out port passing through the beam body 131. The first leading-out port and the second leading-out port are spaced apart. The first leading-out port is communicated between the battery compartment 101 and the electric appliance compartment 102. The first leading-out port is configured to allow an acquisition component 310 of the battery cell module 300 to extend into the electric appliance compartment 102. The second leading-out port is communicated between the battery compartment 101 and the electric appliance compartment 102. The second leading-out port is configured to allow a busbar 320 of the battery cell module 300 to extend into the electric appliance compartment 102. By providing the first leading-out port, it can be convenient for the acquisition component 310 to extend into the electric appliance compartment 102 to ensure that a signal acquired by the acquisition component 310 is transmitted to the electric appliance element 200. By providing the second leading-out port, it can be convenient for the busbar 320 to extend into the electric appliance compartment 102 to ensure that energy in the busbar 320 is transmitted to the electric appliance element 200 and output in a unified mode.

According to some embodiments of the present disclosure, referring to Fig. 1, two first leading-out ports are provided, and the two first leading-out ports are respectively formed at two ends (left and right ends of the beam body 131 as shown in Fig. 1) of the beam body 131 in a length direction thereof (the left-right direction as shown in Fig. 1), and the second leading-out port is formed at a middle position on the beam body 131 in the length direction thereof. Thus, the first leading-out ports and the second leading-out port are spaced apart so that the first leading-out ports and the second leading-out port do not influence each other, and it can be convenient for the acquisition components 310 to extend out through the first leading-out ports and for the busbar 320 to extend out through the second leading-out port and be connected to the electric appliance element 200.

Further, as shown in Fig. 1, before the battery cell module 300 enters the battery compartment 101, the acquisition component 310 extends forward. When battery cell module 300 enters the battery compartment 101, the acquisition component 310 on a left side of the battery cell module 300 is bent to the right so as to be parallel to a left-right direction of the battery cell module 300, and the acquisition component 310 on a right side of the battery cell module 300 is bent to the left so as to be parallel to the left-right direction of the battery cell module 300. Each acquisition component 310 is connected to the electric appliance element 200 after being passed through the first leading-out port. The busbar 320 is provided with two connecting portions that protrude forward. The connecting portions are connected to the electric appliance element 200 after extending out through the second leading-out port.

According to some embodiments of the present disclosure, referring to Figs. 1, 2, and 3, the battery case 100 may further include a plug socket 30. The plug socket 30 is fixed within the electric appliance compartment 102 and configured to be connected to the acquisition component 310. The cover plate 132 is formed with a first wire-through hole 1321 passing through the cover plate 132 in a thickness direction of the cover plate 132 (a front-back direction of the cover plate 132 as shown in Fig. 1). The first wire-through hole 1321 is configured to allow a first wire harness connected to the plug socket 30 and/or the acquisition component 310 to pass through. That is, the first wire-through hole 1321 may be configured to allow a first wire harness to pass through; and the first wire harness may be connected to the plug socket 30, and the first wire harness may also be connected to the acquisition component 310. By providing the first wire-through hole 1321, the first wire harness can be led out through the first wire-through hole 1321, facilitating connection of the first wire harness to a control board. The plug socket 30 and the acquisition component 310 are connected in a plug-in manner. This type of connection is simple, cost-effective, and convenient for batch production. Moreover, the plug-in connection can ensure simultaneous transmission of a variety of signals and guarantee a transmission effect.

For example, as shown in Figs. 2 and 3, the plug socket 30 is strip-shaped and arranged in an up-down direction, with a plurality of signal-receiving wires spaced apart in the up-down direction. The plurality of signal-receiving wires are inserted into the acquisition assembly 310 to achieve signal transmission.

According to some embodiments of the present disclosure, referring to Figs. 1, 2, and 3, the battery case 100 may further include an output pole seat 20. The output pole seat 20 is fixed within the electric appliance compartment 102 and configured to be connected to the busbar 320. The cover plate 132 is formed with a second wire-through hole 1322 passing through the cover plate 132 in a thickness direction of the cover plate 132 (the front-back direction of the cover plate 132 as shown in Fig. 1). The second wire-through hole 1322 is configured to allow terminal posts 40 connected to the busbar 320 to pass through. That is, the second wire-through hole 1322 is configured to allow terminal posts 40 to pass through, and the terminal posts 40 are connected to the busbar 320. By providing the second wire-through hole 1322, the terminal posts 40 can be led out through the second wire-through hole 1322, facilitating connection of the terminal posts 40 to a motor. In addition, providing the first wire-through hole 1321 and the second wire-through hole 1322 allows the first wire harness to be separated from the terminal posts 40, preventing the first wire harness and the terminal posts 40 from coming into contact, which would otherwise pose a risk. Furthermore, the fixed connection between the busbar 320 and the output pole seat 20 can ensure an energy transmission effect, and can also prevent the energy transmitted by the busbar 320 from affecting signals of the acquisition assembly 310, thereby ensuring the safety of the battery cell module 300.

For example, as shown in Fig. 1, the first wire-through hole 1321 is formed on a left side of the second wire-through hole 1322. After the acquisition component 310 is connected to the plug socket 30 in a plug-in manner, the first wire harness is connected to the plug socket 30, after which the first wire harness extends out through the first wire-through hole 1321. The output pole seat 20 is in a concave shape with a lower middle portion and two higher lateral portions. Two connecting portions of the busbar 320 are respectively connected to the two lateral portions of the output pole seat 20. The output pole seat 20 and the busbar 320 are fastened to each other by a bolt. Preferably, the output pole seat 20 is made of plastic, which can insulate the busbar 320 from surrounding members.

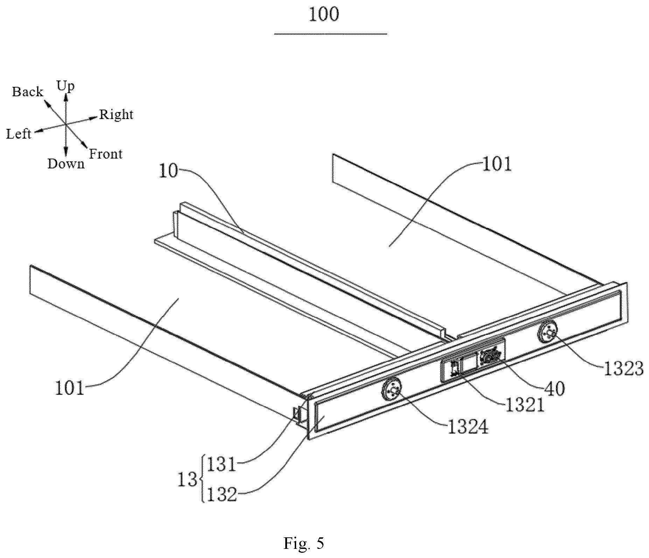

According to some embodiments of the present disclosure, referring to Figs. 1 and 5, the cover plate 132 is further provided with a water inlet port 1323 and a water outlet port 1324. The water inlet port 1323 and the water outlet port 1324 are configured to be connected to a heat exchange pipe 400. At least a portion of the heat exchange pipe 400 is located within the electric appliance compartment 102. That is, the heat exchange pipe 400 may be partially located within the electric appliance compartment 102, or the heat exchange pipe 400 may be entirely located within the electric appliance compartment 102. Thus, the heat exchange pipe 400 can absorb heat emitted by the electric appliance element 200 within the electric appliance compartment 102, thereby satisfying the need to maintain a constant temperature for the electric appliance element 200, and ensuring normal operation of the electric appliance element 200.

Further, as shown in Fig. 1, a liquid cooling plate is provided within the battery case 100, with a heat exchange channel as well as a first connecting pipe and a second connecting pipe communicated with the heat exchange channel being provided in the liquid cooling plate. The heat exchange pipe 400 includes a water inlet pipe and a water outlet pipe. One end of the water inlet pipe is connected to the first connecting pipe and the other end thereof is connected to the water inlet port 1323. One end of the water outlet pipe is connected to the second connecting pipe and the other end thereof is connected to the water outlet port 1324. Liquid flows into the water inlet pipe of the heat exchange pipe 400 from the water inlet port 1323, then from the water inlet pipe into the first connecting pipe of the liquid cooling plate, and from the first connecting pipe into the heat exchange channel, after which the liquid flows out of the heat exchange channel and through the second connecting pipe, and then from the second connecting pipe into the water outlet pipe of the heat exchange pipe 400, and flows out of the water outlet pipe of the heat exchange pipe 400 and through the water outlet port 1324, thus completing heat exchange between the battery cell module 300 and the electric appliance element 200.

According to some embodiments of the present disclosure, referring to Fig. 1, the cover plate 132 is an aluminum-based stamped part. Thus, the weight of the electric appliance compartment 102 can be reduced while ensuring the strength of the cover plate 132.

According to some embodiments of the present disclosure, referring to Fig. 1, the beam body 131 is an aluminum-magnesium alloy die-cast part. Thus, the strength of the beam body 131 can be ensured, the service life of the beam body 131 can be improved, and the electric appliance compartment 102 can be prevented from being deformed or damaged, thereby ensuring normal operation of the electric appliance element 200 within the electric appliance compartment 102. Preferably, the beam body 131 is formed by die casting using aluminum casting technology, which can ensure the strength of the beam body 131.

Referring to Fig. 1, a power device 1000 according to a second aspect of the present disclosure includes a battery case 100 in the first aspect of this embodiment.

According to the power device 1000 of embodiments of the present disclosure, by providing the battery case 100 in the first aspect described above on the power device 1000, and by providing the battery compartment 101 and the electric appliance compartment 102 which are spaced apart on the battery case 100, the battery cell module 300 can be separated from the electric appliance element 200, so that the operation safety of the power device 1000 is guaranteed; additionally, maintenance of the electric appliance element 200 is facilitated, and energy in the battery cell module 300 can be output in a unified mode.

A battery device 1000 according to embodiments of the present disclosure is described below with reference to Figs. 1 to 5.

The battery device 1000 according to embodiments of the present disclosure includes a heat exchange pipe 400, a battery cell module 300, an electric appliance element 200, and a battery case 100. The battery cell module 300 and the heat exchange pipe 400 are mounted within the battery case 100, and the battery cell module 300 has an acquisition component 310 and a busbar 320 connected thereto.

The battery case 100 includes a first beam 11, a second beam, a third beam 12, and an electric appliance beam 13. The first beam 11, the second beam, the third beam 12, and the electric appliance beam 13 are sequentially connected to form a rectangular loop and define inwardly a battery compartment 101 that is open at both the top and bottom thereof. Furthermore, a fourth beam 14 parallel to both the first beam 11 and the third beam 12 is also provided at a middle position in a left-right direction of the battery case 100. The fourth beam 14, together with the first beam 11, the second beam, the third beam12 and the electric appliance beam 13, forms a frame 10 in the shape of a rectangle with a central divider The battery case 100 is internally equipped with an output pole seat 20, a plug socket 30, a first wire harness, a busbar 320, and terminal posts 40. The output pole seat 20 is connected to the busbar 320. The terminal posts 40 are connected to the output pole seat 20. The plug socket 30 is connected to the acquisition component 310. The first wire harness is connected to the plug socket 30.

The electric appliance beam 13 includes a beam body 131 and a cover plate 132. The beam body 131 is a rectangular structure with an open front side. An electric appliance compartment 102 is formed inside the beam body 131. The electric appliance element 200, the output pole seat 20, the plug socket 30, the first wire harness, the busbar 320, and the terminal posts 40 are mounted within the electric appliance compartment 102. A flanged edge is provided around the periphery of the beam body 131. Two first leading-out ports and one second leading-out port are formed on a back side of the beam body 131. The cover plate 132 is plate-like, and covers the open side of the beam body 131.

The cover plate 132 is formed with a first wire-through hole 1321, a second wire-through hole 1322, a water inlet port 1323, and a water outlet port 1324. The first wire harness extends out through the first wire-through hole 1321. The terminal posts 40 extend out through the second wire-through hole 1322. The water inlet port 1323 is connected to a water inlet end of the heat exchange pipe 400. The water outlet port 1324 is connected to a water outlet end of the heat exchange pipe 400.

According to the battery case 100 of the present disclosure, by arranging the battery compartment 101 and the electric appliance compartment 102 which are spaced apart, the battery cell module 300 can be separated from the electric appliance element 200, such that the battery cell module 300 can be prevented from affecting the electric appliance element 200 when thermal runaway occurs in the battery cell module 300, thereby improving the safety of the power device 1000. Furthermore, the electric appliance compartment 102 is formed by the beam body 131 of the electric appliance beam 13. This type of structure is simple, does not take up excess space of the battery case 100, and can improve space utilization. In addition, the cover plate 132 cooperates with the beam body 131 to close the open side of the beam body 131, thereby protecting the electric appliance element 200. Moreover, the cover plate 132 is convenient to remove, which also facilitates maintenance of the electric appliance element 200.

In description of the present disclosure, it should be understood that orientation or position relations indicated by the terms "center", "longitudinal", "transverse", "length", "width", "thickness", "upper", "lower", "front", "back", "left", "right", "vertical", "horizontal", "top", "bottom", "inner", "outer", "clockwise", "counter-clockwise", "axial", "radial", "circumferential", and the like are orientation or position relations illustrated based on the drawings, and are merely for the convenience of describing the present disclosure and simplifying description, instead of indicating or implying the denoted devices or elements necessarily have specific orientations or be constructed and operated in specific orientations . Therefore, such terms should not be construed as limiting the present disclosure.

In addition, the terms "first" and "second" are used only for descriptive purposes and should not be construed as indicating or implying relative importance or implicitly indicating the numbers of indicated technical features. Thus, a feature qualified by the term "first" or "second" may explicitly or implicitly include one or more such features. In description of the present disclosure, the term "plurality" means two or more, unless otherwise expressly and specifically defined.

In the present disclosure, unless otherwise clearly specified and defined, the terms "install", "be connected with", "be connected", "be fixed" and the like should be understood in a broad sense. For example, it may indicate fixed connection, or detachable connection, or integration; it may indicate mechanical connection, or electrical connection, or communication; it may indicate direct connection, or indirect connection through an intermediate medium, or internal communication between two elements or interaction relationship between two elements. For those of ordinary skill in the art, specific meanings of the above-mentioned terms in the present disclosure may be construed according to specific circumstances.

In description of this specification, description with reference to terms such as "an embodiment", "some embodiments", "example", "specific example", or "some examples" means that a specific feature, structure, material or characteristic described in conjunction with the embodiment or example is included in at least one embodiment or example of the present disclosure. In this specification, illustrative expressions of the above terms are not necessarily directed to the same embodiment or example. Moreover, the specific feature, structure, material or characteristic described may be combined in a suitable manner in any one or more embodiments or examples. In addition, those skilled in the art may combine and merge different embodiments or examples described in this specification and features in the different embodiments or examples without mutual conflicts.

Although embodiments of the present disclosure have been shown and described, those of ordinary skill in the art may understand that various changes, modifications, substitutions and variations can be made to these embodiments without departing from the principle and purpose of the present disclosure, and the scope of the present disclosure is defined by the claims and equivalents thereof.

## Claims

1. A battery case, having a battery compartment and an electric appliance compartment which are spaced apart, wherein the battery compartment is configured to accommodate a battery cell module, and the electric appliance compartment is configured to arrange an electric appliance element therein.

2. The battery case according to claim 1, wherein the electric appliance compartment is arranged on an end of the battery case in a first direction thereof, the first direction being a length direction or a width direction of the battery case.

3. The battery case according to claim 1, wherein the battery case comprises a frame, which comprises a first beam, a second beam, a third beam, and an electric appliance beam that are sequentially connected end-to-end to form a rectangular loop and define inwardly the battery compartment that is open at both the top and bottom thereof, with the electric appliance compartment being formed within the electric appliance beam.

4. The battery case according to claim 3, wherein a fourth beam parallel to both the first beam and the third beam is provided at a middle position in a left-right direction of the battery case, two ends of the fourth beam being respectively connected to the electric appliance beam and the second beam, and wherein the fourth beam, together with the first beam, the second beam, the third beam and the electric appliance beam, form a frame in the shape of a rectangle with a central divider.

5. The battery case according to claim 4, wherein the electric appliance beam extends from one end to the other end in a length direction of the battery case, and the electric appliance compartment extends from one end to the other end in a length direction of the electric appliance beam.

6. The battery case according to claim 3, wherein the electric appliance beam comprises a beam body and a cover plate, the beam body defining the electric appliance compartment that has an open side facing away from the battery compartment, and the cover plate covering the open side of the electric appliance compartment.

7. The battery case according to claim 6, wherein the beam body is formed with a first leading-out port and a second leading-out port passing through the beam body, the first leading-out port and the second leading-out port being spaced apart, the first leading-out port being communicated between the battery compartment and the electric appliance compartment, the first leading-out port being configured to allow an acquisition component of the battery cell module to extend into the electric appliance compartment, the second leading-out port being communicated between the battery compartment and the electric appliance compartment, and the second leading-out port being configured to allow a busbar of the battery module to extend into the electric appliance compartment.

8. The battery case according to claim 7, wherein two first leading-out ports are provided, and the two first leading-out ports are respectively formed at two ends of the beam body in a length direction thereof, and the second leading-out port is formed at a middle position on the beam body in the length direction thereof.

9. The battery case according to claim 7, wherein the battery case further comprises a plug socket, which is fixed within the electric appliance compartment and configured to be connected to the acquisition component, and the cover plate is formed with a first wire-through hole passing through the cover plate in a thickness direction of the cover plate, the first wire-through hole being configured to allow a first wire harness connected to the plug socket and/or the acquisition component to pass through.

10. The battery case according to claim 7, wherein the battery case further comprises an output pole seat, which is fixed within the electric appliance compartment and configured to be connected to the busbar, and the cover plate is formed with a second wire-through hole passing through the cover plate in a thickness direction of the cover plate, the second wire-through hole being configured to allow terminal posts connected to the busbar to pass through.

11. The battery case according to claim 10, wherein the output pole seat is in a concave shape with a lower middle portion and two higher lateral portions, and two connecting portions of the busbar are respectively connected to the two lateral portions of the output pole seat, and the output pole seat and the busbar are fastened to each other by a bolt; and/or
the output pole seat is made of plastic.

12. The battery case according to claim 6, wherein the cover plate is further provided with a water inlet port and a water outlet port, which are configured to be connected to a heat exchange pipe, and at least a portion of the heat exchange pipe is located within the electric appliance compartment.

13. The battery case according to claim 12, wherein a liquid cooling plate is provided within the battery case, with a heat exchange channel as well as a first connecting pipe and a second connecting pipe communicated with the heat exchange channel being provided in the liquid cooling plate, and the heat exchange pipe comprises a water inlet pipe and a water outlet pipe, one end of the water inlet pipe being connected to the first connecting pipe and the other end thereof being connected to the water inlet port, and one end of the water outlet pipe being connected to the second connecting pipe and the other end thereof being connected to the water outlet port.

14. The battery case according to claim 6, wherein the cover plate is an aluminum-based stamped part, and the beam body is an aluminum-magnesium alloy die-cast part.

15. A power device comprising the battery case according to any one of claims 1 to 14.
